# EUROPÄISCHE PATENTSCHRIFT

(11) **EP 0 719 404 B1**
(45) Veröffentlichungstag und Bekanntmachung des Hinweises auf die Patenterteilung: **14.01.1998**
(21) Anmeldenummer: 94928360.0
(22) Anmeldetag: 15.09.1994
(51) Int. Cl.: G01H 11/00, G08C 17/04

(54) **SENSORSYSTEM**
SENSOR SYSTEM
SYSTEME DE DETECTION

(30) Priorität: 16.09.1993 DE 4331523; 17.09.1993 DE 4331534
(43) Veröffentlichungstag der Anmeldung: 03.07.1996
(73) Patentinhaber: Kluft, Werner, D-52078 Aachen (DE)
(72) Erfinder: Kluft, Werner, D-52078 Aachen (DE)
(74) Vertreter: Dallmeyer, Georg, Dipl.-Ing.
(86) Internationale Anmeldenummer: EP9403092
(87) Internationale Veröffentlichungsnummer: WO9508099

(56) Entgegenhaltungen:
- EP-A- 0 446 849
- DE-A- 3 330 519
- DE-C- 4 238 425
- FR-A- 2 582 126

## Beschreibung

Die Erfindung betrifft ein Sensorsystem nach dem Oberbegriff des Anspruchs 1.

Bisher sind zur Werkzeugüberwachung Körperschall- und Schwingungssensoren bekannt, die auf ein ortsfestes Maschinenbauteil montiert werden. Die Körperschall- bzw. Schwingungssignale müssen dann von ihrem Entstehungsort über mehrere Maschinenelemente, die teilweise translatorisch und/oder rotatorisch bewegt werden oder bewegbar sind und damit über mehrere Trennstellen zwischen den Maschinenelementen bis zu der Stelle des ortsfesten Maschinenelementes transportiert werden, an dem sich der Sensor befindet. Es ist bekannt, daß insbesondere an jeder Trennstelle zwischen zwei Maschinenelementen, aber auch in jedem Maschinenelement selbst Schwingungssignale und insbesondere Körperschallsignale, insbesondere wenn es sich um hohe Frequenzbereiche handelt, stark gedämpft werden.

Im Falle der Werkzeugüberwachung ist es deshalb das Ziel, die Schwingungs- oder Körperschallsensoren möglichst dicht an die Stelle zu bringen, wo der Bearbeitungsvorgang stattfindet. Somit sollte sich der Sensor möglichst auf dem Werkzeugstück oder auf dem Werkzeug befinden. Da es sich beim Werkstück und Werkzeug um Bauteile handelt, die wiederholt ausgetauscht werden, ist eine Anbringung der Sensoren auf diesen nicht sinnvoll.

Bei rotierenden Werkzeugen, wie z.B. Bohrwerkzeugen, Gewindeschneidwerkzeugen, Reibwerkzeugen oder Fräswerkzeugen wird das Schwingungs- oder Körperschallsignal vom Werkzeug über die Werkzeugaufnahme bzw. die Spannvorrichtung in die Welle geleitet und von dort aus über eine Lagerung auf ein Spindelgehäuse. Gemäß dem Stand der Technik werden die Körperschallsensoren heute auf einem solchen Spindelgehäuse befestigt und die Körperschallüberwachung muß mit stark gedämpften Körperschall- oder Schwingungssignalen arbeiten, welches der Überwachungsqualität schadet. Ferner muß sie mit Störgeräuschen aus der Lagerung, die oft eine Wälzlagerung ist, zurechtkommen.

Oft besteht heute auch die Forderung, zum Zwecke der Werkzeugüberwachung das Schwingungs- oder Körperschallsignal vom Werkstück abzunehmen. Da auch dieses naturgemäß oft ausgetauscht wird, wäre die ideale Befestigungsstelle für Sensoren der Werkstückträger oder die Werkstückspannvorrichtung. Bei Bearbeitungszentren, Fräs- oder Bohrmaschinen werden die Werkstücke jedoch oft auf Paletten gespannt, die über entsprechende Schlittenführungssysteme zu den Zerspanungswerkzeugen transportiert und nach der Zerspanung wieder wegtransportiert werden, um die Paletten außerhalb des eigentlichen Bearbeitungsraumes mit Werkstücken zu be- und entladen. Es ist möglich, einen Schwingungs- oder Körperschallaufnehmer an der Werkstückaufnahme bzw. Spannvorrichtung oder an der Palette zu montieren; dies hat allerdings aufgrund des Anschlußkabels den Nachteil, die Bewegung der Paletten bzw. Schlitten zu behindern, falls nicht zusätzlich Übertragungsvorrichtungen für das Körperschallsignal geschaffen werden. Ohne diese Übertragungsvorrichtung kann ein Körperschallsensor derzeit nur an den ortsfesten Schlittenführungen angebracht werden, wobei das Signal, welches von dem Werkstück ausgeht, über die verschiedenen Trennebenen zwischen den Maschinenelementen und den Maschinenelementen selbst erheblich gedämpft wird. Solche dazwischenliegenden Maschinenelemente sind z.B. die Werkstückträger bzw. die Spannvorrichtung selbst, die Palette, der Tisch mit seinen eigenen Führungseinheiten und die zwischen Tisch und Führungseinheiten befindlichen Bauelemente wie z.B. Stirnzahnringe, die dazu dienen, daß sich der Tisch gegenüber seinen Führungen zur Positionierung des Werkstückes drehen kann.

Drehwerkzeuge befinden sich oft auf einem Werkzeugrevolver, der mit mehreren Werkzeugen bestückt ist. Während der Nebenzeiten schwenkt der Werkzeugrevolver die auf seiner Revolverscheibe bzw. auf seinem Revolverkopf befindlichen Werkzeuge in eine andere Position, so daß anschließend die Bearbeitung des Werkstückes mit einem anderen Werkzeug fortgesetzt werden kann. Gemäß dem Stand der Technik werden Körperschallsensoren heute auf das Revolvergehäuse montiert. Die Schwingungs- bzw. Körperschallsignale müssen bis zum Sensor den Weg vom Werkzeug über den Werkzeughalter zum Werkzeugträger dann über die Revolverscheibe bzw. den Revolverkopf, welche meist noch über ein oder mehrere Stirnzahnringe verfügen, zum Revolvergehäuse und dann zum Sensor zurücklegen. Auch hier ist die Dämpfung des Signales durch die vielen Koppelstellen zwischen den einzelnen Maschinenelementen erheblich.

Geräuscherzeugende Bauteileinheiten, wie z.b. Motoren, Getriebe etc. dürfen heute gemäß Kundenvorschrift ein gewisses Geräuschniveau nicht überschreiten. Gemäß dem Stand der Technik wird dieses Problem heute derart gelöst, daß in schallarmen Prüfkabinen der Luftschall, der durch die Bauteileinheit abgegeben wird, über Luftschallmikrophone erfaßt und geeigneten Prüf- oder Überwachungsgeräten zugeführt wird.

Bei einem bekannten Sensorsystem zur Körperschallmessung ist ein separater Körperschallsensor auf einem translatorisch oder rotatorisch bewegten Maschinenelement, in diesem Falle ein Mehrspindelbohrkopf, montiert und die Körperschallsignale werden zu einem sogenannten Rotor geführt, wo sie verstärkt und an den Stator übergeben werden. Diese Vorrichtung speist jedoch elektrische Energie in den Rotor ein, womit die Verstärkung bzw. die Signalaufbereitung erfolgen kann, um das Körperschallsignal an den Stator zu übertragen. Ein derartiges Sensorsystem hat außerdem den erheblichen Nachteil, daß es viele Bauelemente benötigt, demzufolge entsprechend teuer ist und insbesondere viel Platz benötigt.

Die DE 33 30 519 A1 beschreibt ein Verfahren zur berührungslosen Übertragung eines Signales von einem ausschließlich rotierendem Bauteil auf ein feststehendes Bauteil wobei die Signalübertragung durch zwei induktiv miteinander gekoppelte Spulen vorgenommen wird. Die sensorseitige Spule ist Bestandteil eines Resonanzschwingkreises mit einem piezoelektrischen Wandler. Eine derartige Anordnung ist bereits sehr platzsparend. Bei diesem Verfahren ist jedoch nachteilig, daß sensorseitig eine Reihe von Bauteilen zum Aufbau des Resonanzschwingkreises erforderlich sind und ferner über eine Gegeninduktivität weitere Bauteile auf der Empfängerseite benötigt werden. Das Verfahren gemäß DE 33 30 519 A1 ist nur für rotierende Bauteile vorgesehen und/oder benötigt eine größere Menge an aktiven und passiven elektronischen Bauteilen.

Die FR-A-25 82 126 betrifft eine Einrichtung zur kontaktlosen Signalübertragung, bei der ein Sensor unmittelbar an eine Primärspule angeschlossen ist. Der Sensor und die Primärspule sind in einem rotierenden Teil angeordnet, während die Sekundärspule mit einer Signalauswerteeinrichtung in einem ortsfesten Maschinenelement angeordnet sind. Ein durch beide Spulen hindurchgeführter Kern rotiert gemeinsam mit dem Sensor und der Primärspule.

Die EP-A-0 446 849 beschreibt eine Vorrichtung zur Berührungserkennung an Schleifmaschinen. Diese Vorrichtung kommt dabei, ähnlich wie das letztgenannte Verfahren zur Übertragung von Meßsignalen ohne Hilfsenergiequelle im Sensorteil aus. Ihre Anwendung ist ausschließlich auf die Erkennung von Berührungen zwischen einer, einen ersten Körper bildenden Schleifscheibe und einem zu schleifenden, einen zweiten Körper bildenden Werkstück begrenzt. Ferner ist sie begrenzt auf die Anwendung auf rotierenden Wellen von Schleifscheiben.

Der Erfindung liegt die Aufgabe zugrunde, Schwingungs- oder Körperschallsignale von translatorisch oder rotatorisch bzw. translatorisch und rotatorisch bewegbaren Maschinenelementen, auf denen sich Werkzeuge, Werkstücke oder geräuscherzeugende Bauteileinheiten befinden, drahtlos abzugreifen und an eine entsprechende Überwachungs- oder Prüfeinrichtung weiterzuleiten.

Zur Lösung dieser Aufgabe dienen die Merkmale des Anspruchs 1 bzw. 2.

Hierzu ist einerseits vorgesehen, daß daß mehrere bewegbare Maschinenelemente jeweils eine Sensorvorrichtung aufweisen, von denen eine der Sensorvorrichtungen jedesmal dann ein Meßsignal in die Empfängervorrichtung am ortsfesten Maschinenelement transformiert, wenn das bewegbare Maschinenelement mit seiner Sensorvorrichtung so positioniert ist, daß sich die Primär- und Sekundärspule unter Einhaltung des Luftspaltabstandes gegenüberstehen.

Andererseits ist vorgesehen, daß ein oder mehrere bewegbare Maschinenelemente jeweils mehrere Sensorvorrichtungen aufweisen, und daß jede dieser Sensorvorrichtungen jedesmal dann ein Meßsignal in die Empfängervorrichtung am ortsfesten Maschinenelement transformiert, wenn das bewegbare Maschinenelement mit seiner Sensorvorrichtung so positioniert ist, daß sich die Primär- und Sekundärspule unter Einhaltung des Luftspaltabstandes gegenüberstehen.

Das Sensorsystem zur Messung von Schwingungs- und/oder Körperschallsignalen für die Überwachung von Werkzeugen oder geräuscherzeugenden Bauteilen in Werkzeug- oder Prüfmaschinen greift die Körperschallsignale von einem Maschinenelement ab, das translatorisch oder rotatorisch bzw. translatorisch und rotatorisch bewegbar ist.

Die Erfindung schafft ein Sensorsystem, welches die Körperschallsignale bereits von der Palette bzw. von der Werkstückträger- oder Werkstückspannvorrichtung abgreift und damit die beschriebene Dämpfung des Körperschallsignales vermeidet.

Die Erfindung sieht in vorteilhafter Weise ein Sensorsystem vor, welches sensorseitig lediglich einen Gehäusekörper, ein piezoelektrisches oder elektrodynamisches Schwingungselement und eine Primärspule besitzt und, wobei empfängerseitig lediglich eine Sekundärspule in einem entsprechenden Gehäuse vorhanden ist. Ein derartiges Sensorsystem kommt in verschiedenen Anwendungen zum Einsatz.

Ferner ermöglicht die Erfindung eine verbesserte Überwachung von Kollisionen zwischen Schleifscheiben und anderen Maschinenelementen in einer Schleifmaschine und eine bessere Abrichtüberwachung von Schleifscheiben, wie sie heute mit kabelführenden ortsfesten Körperschallaufnehmern an nicht rotierenden Teilen von Schleifscheiben vorgenommen werden.

Es ist auch möglich, das Sensorsystem zur Geräuschmessung in Prüfständen oder Prüfvorrichtungen, in denen diese Bauteileinheiten heute ohnehin hinsichtlich anderer Funktionskriterien geprüft werden, das durch sie abgegebene Geräusch oder Schwingungssignal durch einen Schwingungs- oder Körperschallsensor zu erfassen. Dadurch werden die schallarmen Prüfstände überflüssig. Auch in diesem Fall besteht, wie bei der Bohr- oder Fräsmaschine bzw. dem Bearbeitungszentrum das Problem, daß sich die Baueinheiten auf einer Transportvorrichtung befinden, die beweglich ist, und daß das Kabel eines Schwingungs- oder Körperschallsensors, welches auf dieser Transportvorrichtung befestigt wäre, unzulässig stören würde.

Im folgenden werden unter Bezugnahme auf die Zeichnungen Ausführungsbeispiele näher erläutert.

Es zeigen:
- Fig. 1: ein erstes Ausführungsbeispiel,
- Fig. 2: ein Ausführungsbeispiel mit elektrischem Isolator,
- Fig. 3: ein Ausführungsbeispiel mit einem Sensorgehäuse aus Isoliermaterial,
- Fig. 4: ein Ausführungsbeispiel, bei der die Sensorelemente versenkt angeordnet sind,
- Fig. 5: eine Empfängervorrichtung mit integriertem Verstärker,
- Fig. 6: ein Empfänger- oder Sensorgehäuse mit Befestigungsnut,
- Fig. 7: ein Empfänger- oder Sensorgehäuse mit einem Befestigungsbund,
- Fig. 8: ein Sensorsystem gemäß einem Ausführungsbeispiel der Erfindung mit einer einzigen Empfängervorrichtung und mehreren Sensorvorrichtungen,
- Fig. 9: eine Anordnung des Sensorsystems bei Werkzeugrevolvern an Drehmaschinen,
- Fig. 10: ein zweites Ausführungsbeispiel eines Sensorsystems für Werkzeugrevolver,
- Fig. 11a: ein Ausführungsbeispiel des erfindungsgemäßen Sensorsystems in einem Bearbeitungszentrum mit Palettenstationen,
- Fig. 11b: eine Draufsicht zu Fig. 11a,
- Fig. 12: ein Ausführungsbeispiel eines Sensorsystems am offenen Wellenende einer Bohr- oder Frässpindel,
- Fig. 13: ein Ausführungsbeispiel eines Sensorsystems an einem Geräuschprüfstand, und
- Fig. 14: eine Schaltungsanordnung eines Überwachungs- bzw. Prüfsystems

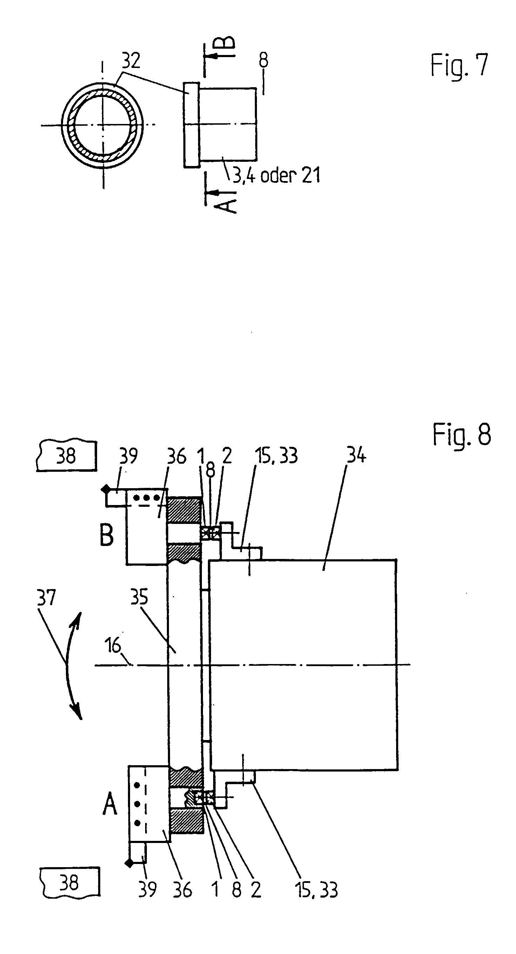

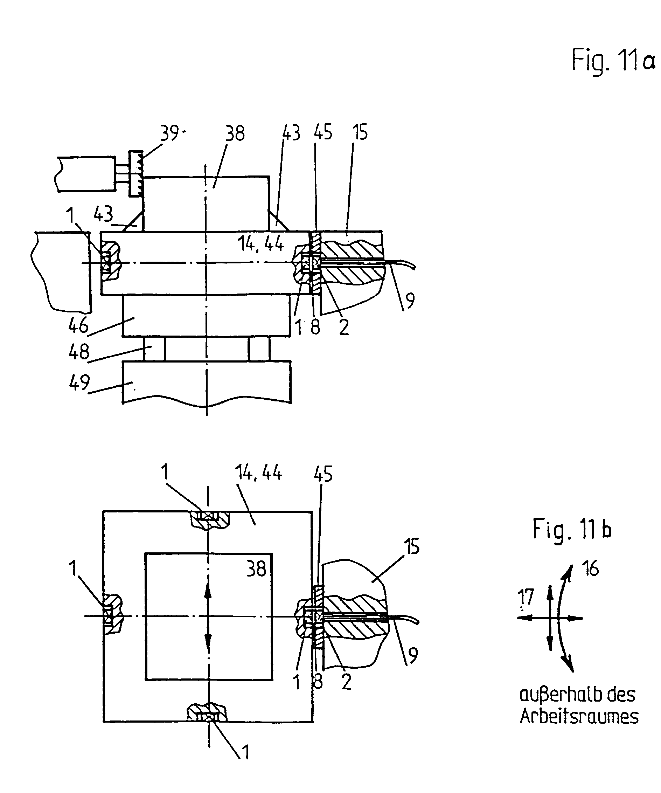

Es wird darauf hingewiesen, daß lediglich die Ausführungsbeispiele der Figuren 8, 11a und 11b Ausführungsbeispiele der durch die Ansprüche 1 und 2 definierten Erfindung darstellen.

Das Sensorsystem besteht im einzelnen aus einer Sensorvorrichtung 1, die berührungslos mit einer Empfängervorrichtung 2 zusammenwirkt. Die Schwingungsenergie eines elektrodynamischen oder piezoelektrischen Messelementes 5 wird ohne weitere Bauelemente mit Hilfe einer mit dem Meßelement 5 elektrisch verbundenen Primärspule 6 berührungslos in der Art eines Transformators auf eine Sekundärspule 7 der Empfängervorrichtung 2 übertragen. Zwischen den sich gegenüberliegenden transformatorischen Spulenpaaren 6,7 ist ein Luftspalt 8 freigehalten, dessen Weite zwischen ca. 0,2 und 2 mm beträgt. Das Meßelement 5 ist über Verbindungsleitungen 10 mit der Primärspule 6 verbunden, während die Sekundärspule 7 ebenfalls mit elektrischen Anschlußdrähten 10 und einem Kabel 9 mit einem Überwachungs- oder Prüfgerät 56 verbunden ist.

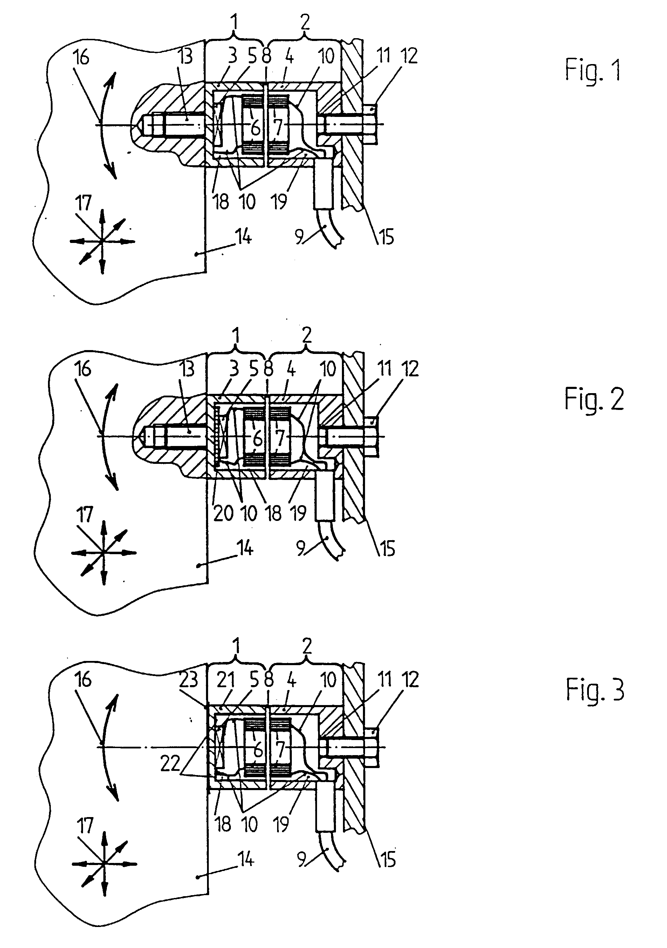

Bei dem Ausführungsbeispiel der Fig. 1 befindet sich die Sensorvorrichtung 1 und die Empfängervorrichtung 2 jeweils in einem Sensorgehäuse 3 aus Metall bzw. in einem Empfängergehäuse 4 aus Metall. Das Sensorgehäuse 3 ist mit einem Gewindestift in einem translatorisch und/oder rotatorisch bewegbaren Maschinenelement 14 befestigt. Die rotatorische Bewegungsachse des Maschinenelementes 14 ist durch den Pfeil 16 gekennzeichnet während die translatorischen Bewegungsachsen mit den Pfeilen 17 angedeutet sind.

Das Empfängergehäuse 4 aus Metall ist mit einer Schraube 12 an einem ortsfesten Maschinenelement 15 befestigt.

Das Sensorgehäuse 3 und das Empfängergehäuse 4 weisen vorzugsweise den gleichen Durchmesser auf, sind zylindrisch gestaltet und koaxial mit gegenseitigem Abstand in Form des Luftspaltes 8 angeordnet.

Bei der Sensorvorrichtung 1 besteht das Sensorgehäuse 3 aus einer metallischen hohlzylindrischen Hülse, wobei das Meßelement 5 in dem Hohlraum 18 auf dem Bodenelement in geeigneter Weise befestigt ist. Der Hohlraum 18 ist vorzugsweise mit einer geeigneten Vergußmasse ausgefüllt, die zugleich die Primärspule 6 in ihrer Lage hält.

Das Empfängergehäuse 4 besteht ebenfalls aus einer hohlzylindrischen metallischen Hülse mit einem Hohlraum 19 in dem die Sekundärspule 7 in einer Vergußmasse eingebettet ist. Aus dem Gehäuse 4 ist ein Kabel 9 herausgeführt. Der Boden des Empfängergehäuses 4 weist ein Gewinde 11 auf, das zur Befestigung des Empfängergehäuses 4 an dem ortsfesten Maschinenelement 15 mit Hilfe der Schraube 12 dient.

Die elektrische Masse des Meßelementes 5 ist über das metallische Gehäuse 3 direkt mit der elektrischen Masse des Maschinenelementes 14 verbunden.

Fig. 2 zeigt ein weiteres Ausführungsbeispiel des Sensorsystems, bei dem zwischen dem Meßelement 5 und dem Boden des metallischen Gehäuses 3 ein Isolator 20 angeordnet ist.

Bei dem Ausführungsbeispiel der Fig. 3 ist vorgesehen, daß das Gehäuse 21 der Sensorvorrichtung 1 zur elektrischen Isolierung der Masse des Meßelementes 5 gegenüber der elektrischen Masse des Maschinenelementes 14 aus einem elektrisch isolierenden, aber gut schwingungs- oder körperschalleitenden Material, z.B. Isolierkeramik, besteht. Zur Abschirmung der Sensorvorrichtung 1 gegenüber elektromagnetischen Störungen ist eine Abschirmung vorgesehen, die darin besteht, daß das Gehäuse 21 von innen metallisch ausgekleidet ist und diese Auskleidung 22 elektrisch mit der elektrischen Masse des Meßelementes 5 verbunden ist.

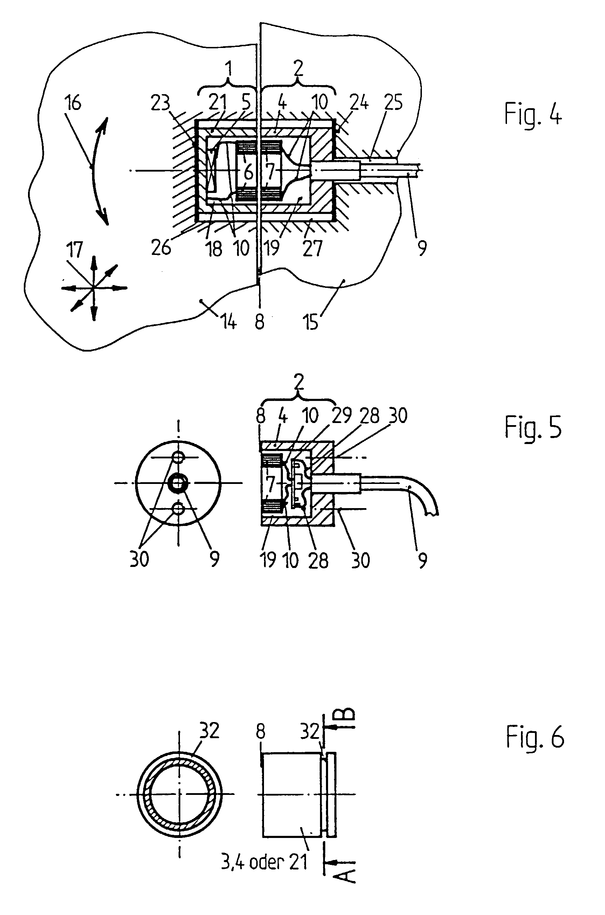

Ein zu Fig. 3 alternatives Ausführungsbeispiel ist in Fig. 4 gezeigt. Das Gehäuse 21 besteht hier ebenfalls aus einem elektrisch isolierenden aber gut schwingungs- oder körperschalleitenden Material, wobei zur Abschirmung der Sensorvorrichtung gegenüber elektromagnetischen Störungen die Sensorvorrichtung 1 in das Maschinenelement 14 eingelassen ist. Das Sensorgehäuse 21 ist mit Hilfe eines Klebers 23 in einer Aussparung 26 des Maschinenelementes 14 versenkt angeordnet.

Die Empfängervorrichtung 2 ist entsprechend mit -Hilfe eines Klebers 24 in einer Aussparung 27 des Maschinenelementes 15 versenkt befestigt. Bei diesem Ausführungsbeipiel weist das Maschinenelement 15 eine Bohrung 25 als Kabelabgang für das Kabel 9 auf.

Das Ausführungsbeispiel der Fig. 5 zeigt eine Empfängervorrichtung 2 mit einer integrierten Impedanzwandler- bzw. -Verstärkeranordnung 29, die über elektrische Verbindungsdrähte 10 mit der Sekundärspule 7 verbunden sind und an der das Kabel 9 mit Verbindungsdrähten 28 angeschlossen ist.

Fig. 6 zeigt einen Sensor- bzw. Empfängergehäuse mit einem Befestigungsmittel 32 in Form einer Nut, während Fig. 7 einen Sensor- oder Empfängergehäuse mit einem Befestigungsmittel 32 in Form eines Bundes zeigt.

In Fig. 8 ist die Anwendung des Sensorsystems bei Werkzeugrevolvern an Drehmaschinen mit mehreren Werkzeughaltern 36 dargestellt. Für jeden Werkzeughalter 36 ist eine Sensorvorrichtung 1 vorgesehen, während nur eine Empfängervorrichtung 2 gegenüber der Sensorvorrichtung 1 angeordnet ist, dessen Werkzeug in der Bearbeitungsposition steht. An dem Revolvergehäuse 34 einer Drehmaschine ist mit Hilfe eines Halter, der zugleich das ortsfeste Maschinenelement 15 bildet, eine Empfängervorrichtung 2 befestigt, die über einen Luftspalt 8 von einer gegenüberliegenden Sensorvorrichtung 1 berührungslos Meßsignale empfangen kann. Die Sensorvorrichtung 1 ist an einem Werkzeughalter 36 an einer Revolverscheibe 35 mit einem oder mehreren Werkzeugen auf der dem Werkzeug abgewandten Seite angeordnet und kann entsprechend dem Teilbild A in den Werkzeughalter 36 eingelassen sein, oder wie im Teilbild B dargestellt, auf diesem aufgesetzt sein. Bei diesem Ausführungsbeispiel wird nur eine einzige Empfängervorrichtung 2 benötigt, die mit der dem in Bearbeitungsposition befindlichen Werkzeug entsprechenden Sensorvorrichtung 1 korrespondiert. Das an dem Werkzeughalter 36 befestigte Werkzeug 39 bearbeitet ein Werkstück 38.

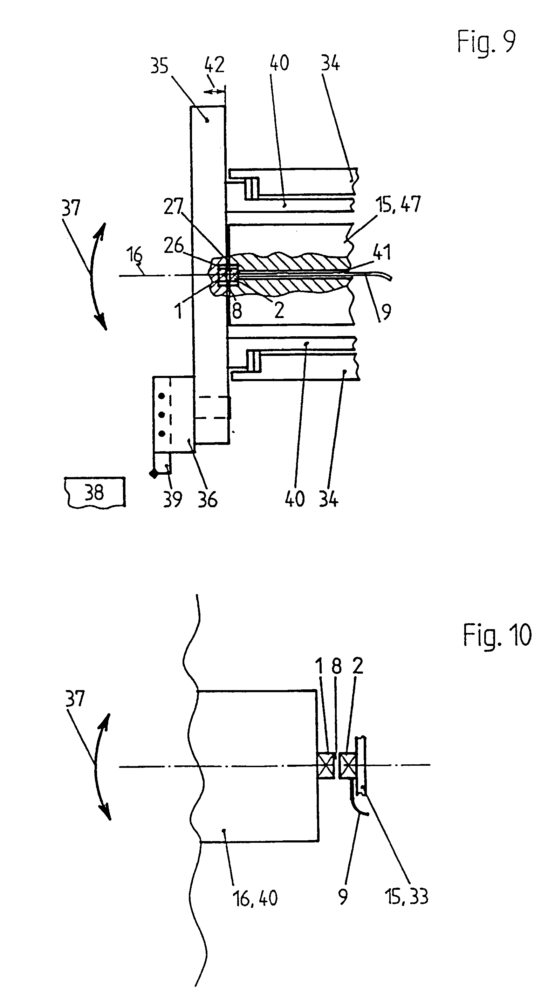

Fig. 9 zeigt ein Ausführungsbeispiel, bei dem das Sensorsystem in einem Werkzeugrevolver in Drehmaschinen eingesetzt ist. Die Revolverscheibe 35 kann eine beliebige Anzahl von Werkzeughaltern 36 aufweisen. Bei diesem Ausführungsbeispiel ist nur eine einzige Sensorvorrichtung 1 und eine einzige Empfängervorrichtung 2 im Revolverzentrum in dessen Rotationsachse angeordnet. Mit 34 ist ein Revolvergehäuse einer Drehmaschine bezeichnet, mit 40 die Hohlwelle eines Werkzeugrevolvers. Konzentrisch mit der Hohlwelle 40 ist eine ortsfeste Haltevorrichtung 47 in dem Werkzeugrevolver angeordnet, die an ihrer der Revolverscheibe 35 zugewandten Stirnfläche unter Einhaltung des Luftspaltes 8 in einer Aussparung 27 die Empfängervorrichtung 2 aufnimmt, die bündig mit der Stirnfläche abschließt. Die Revolverscheibe 35 nimmt koaxial zu der Empfängervorrichtung 2 die Sensorvorrichtung 1 in einer Aussparung 26 auf, wobei die Sensorvorrichtung 1 ebenfalls bündig mit der der Haltevorrichtung 47 zugewandten Stirnfläche der Revolverscheibe 35 abschließt.

Mit diesem Sensorsystem ist es möglich, die Schwingungs- oder Körperschallsignale direkt von der Revolverscheibe 35 abzunehmen.

Mit dem Pfeil 37 ist die Taktrotation der Revolverscheibe 35 angedeutet und mit dem Pfeil 42 ist die Abhebebewegung der Revolverscheibe zur Taktrotation dargestellt.

Fig. 10 zeigt ein Fig. 9 entsprechendes Ausführungsbeispiel, bei dem jedoch das Sensorsystem am hinteren stirnseitigen Ende der Hohlwelle 40 angeordnet ist. Die Hohlwelle 40 rotiert mit der Revolverscheibe 35, wobei die Sensorvorrichtung 1 und die Empfängervorrichtung 2 koaxial zu der Rotationsachse 16 der Revolverscheibe angeordnet sind. Die Empfängervorrichtung 2 ist dabei an einem ortsfesten Maschinenelement 15, wie zuvor beschrieben, befestigt, das aus einem Halter 33 bestehen kann.

Fig. 11a,b, zeigt eine Fräs- oder Bohrmaschine bzw. ein Bearbeitungszentrum mit Palettenstationen. Eine jeweils um 90° verdreht positionierbare, beispielsweise quadratische Palette 44 befindet sich in der Bearbeitungsstation. An jeder der vier seitlichen Stirnflächen ist jeweils koaxial zu der jeweiligen Mittelachse durch die Palette 44 eine Sensorvorrichtung 1 versenkt angeordnet. Mindestens eine Empfängervorrichtung 2 ist an einem ortsfesten Maschinenelement 15 befestigt und mit einer Schutzhülle 45 umgeben. Es können auch mehrere Empfängervorrichtungen 2 gegenüber den jeweiligen Positionen der Sensorvorrichtung 1 angeordnet sein. Die Palette 44 ist auf einem Positionier- bzw. Takt- oder Drehtisch 46 angeordnet, der über Führungen 48 mit dem Maschinenbett bzw. einer Führungsaufnahme 49 verbunden ist. Auf der Palette 44, die das translatorisch und/oder rotatorisch bewegbare Maschinenelement 14 bildet, ist ein Werkstück 38 mit Hilfe einer Werkstückspannvorrichtung 43 befestigt. Auf das Werkstück 38 wirkt beispielsweise ein Fräswerkzeug 39 ein, dessen induzierte Körperschall- und Schwingungssignale von dem Sensorsystem aufgenommen werden.

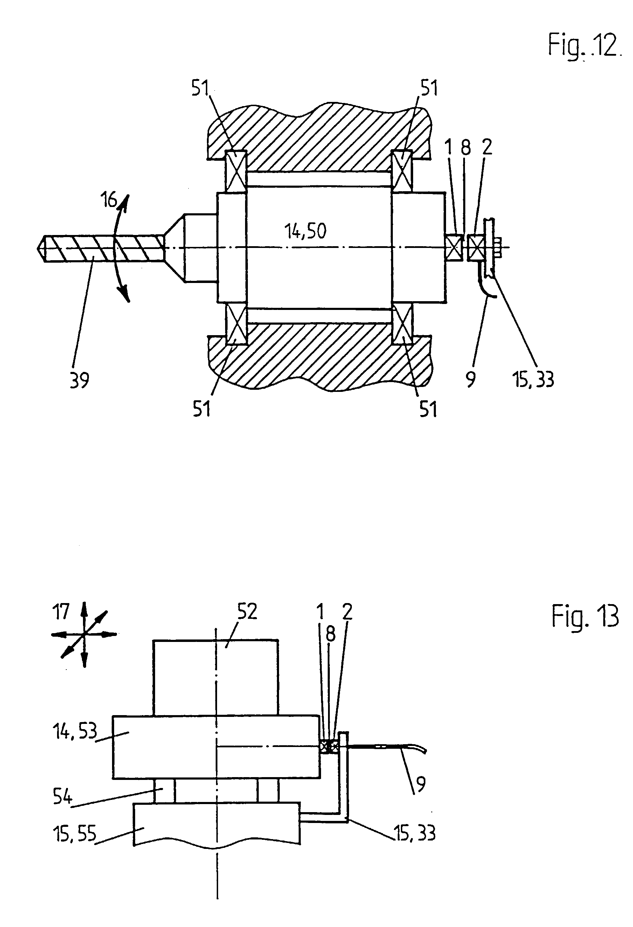

Fig. 12 zeigt ein Anwendungsbeispiel für das Sensorsystem bei einer Bohr- oder Frässpindel 50, die an ihrem vorderen und hinteren Ende mit Hilfe von Lagerungen 51 drehbar gelagert ist. Als Werkzeug 39 ist ein Bohrer eingesetzt.

Am freien Wellenende der Spindel 50 ist koaxial zu der Rotationsachse der Spindel 50 eine Sensorvorrichtung 1 angeordnet. Gegenüber dieser mit der Spindel 50 rotierenden Sensorvorrichtung 1 ist unter Einhaltung des Luftspaltes 8 eine ortsfest an einem Halter 33 befestigte Empfängervorrichtung 2 koaxial zu der Spindelachse angeordnet.

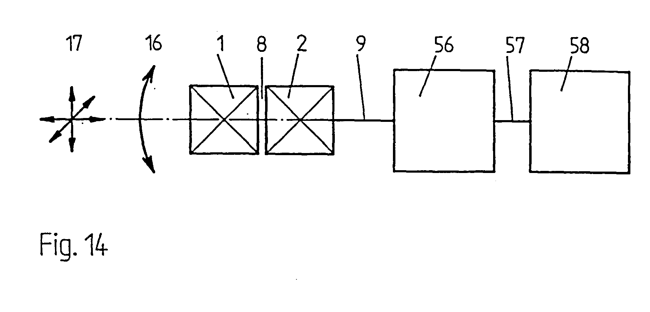

Bei dem Ausführungsbeispiel der Fig. 13 ist die Anwendung des Sensorsystems bei einem Geräuschprüfstand dargestellt. Eine Transportvorrichtung 53, auf der eine Bauteileinheit 52 angeordnet ist, wird zur Prüfung auf eine Geräuschprüfmaschine 55 unter Zwischenschaltung von Geräusch- bzw. Schwingungsdämpfern 54 aufgesetzt. Die Sensorvorrichtung 1 wird an einer Stirnseite der Transportvorrichtung befestigt, während die Empfängervorrichtung 2 über eine mit der Geräuschprüfmaschine 55 als ortsfestes Maschinenelement 15 verbundene Halterung 33 so angeordnet ist, daß die Empfängervorrichtung 2 unter Einhaltung des Luftspaltes 8 im Abstand und koaxial zu der Sensorvorrichtung 1 positioniert ist.

Bei der Geräuschprüfung von geräuscherzeugenden Bauteileinheiten, wie z.B. Motoren, Getrieben u.s.w., wird das Sensorsystem zur Erkennung der Geräuschqualität der Bauteileinheit eingesetzt. Mit Hilfe von Prüf- bzw. Überwachungsgeräten in Verbindung mit dem Sensorsystem kann eine Geräuschqualitätsprüfung vorgenommen werden.

Fig. 14 ist eine schematische Darstellung eines Überwachungs- bzw. Prüfsystems unter Anwendung des Sensorsystems 1,2. Dieses Sensorsystem erzeugt Schwingungs- und/oder Körperschallsignale, die über ein Kabel 9 einem Überwachungs- oder Prüfgerät 56 übertragen werden und dort nach Auswertung über eine Schnittstelle 57 einer Maschinen- oder Prüfgerätesteuerung 58 zugeführt werden, wodurch das Sensorsystem zur Prozeßüberwachung eingesetzt werden kann.

Bei der Überwachung der Werkzeuge handelt es sich um die Erkennung von Überwachungkriterien, wie Werkzeugkontakt, Werkzeugbruch, Werkzeugausbruch, Werkzeugverschleiß oder Werkzeugschwingungen.

## Patentansprüche

1. Sensorsystem aus einer Schwingungs- oder Körperschall-Sensorvorrichtung (1) und einer Empfängereinrichtung (2) mit einem transformatorischen Spulenpaar (6,7), das die Schwingungsenergie eines elektrodynamischen oder piezoelektrischen an einem translatorisch und/oder rotatorisch bewegbaren Maschinenelement (14) befestigten Meßelementes (5) über die mit dem Meßelement (5) ohne weitere Bauelemente direkt elektrisch verbundene, in der Sensorvorrichtung (1) angeordnete Primärspule (6) auf die Sekundärspule (7) des transformatorischen Spulenpaars (6,7) berührungslos überträgt, wobei die Sekundärspule (7) in der zu der Sensorvorrichtung (1) mit einem Luftspalt (8) mit Abstand gehaltenen Empfängervorrichtung (2) an einem ortsfesten Maschinenelement (15) angeordnet ist, die das gemessene und transformierte Schwingungs- oder Körperschall-Meßsignal weiterleitet,
**dadurch gekennzeichnet,**
- daß mehrere bewegbare Maschinenelemente (14) jeweils eine Sensorvorrichtung (1) aufweisen, von denen eine der Sensorvorrichtungen (1) jedesmal dann ein Meßsignal in die Empfängervorrichtung (2) am ortsfesten Maschinenelement (15) transformiert, wenn das bewegbare Maschinenelement (14) mit seiner Sensorvorrichtung (1) so positioniert ist, daß sich die Primär- und Sekundärspule (6,7) unter Einhaltung des Luftspaltabstandes gegenüberstehen.

2. Sensorsystem aus einer Schwingungs- oder Körperschall-Sensorvorrichtung (1) und einer Empfängereinrichtung (2) mit einem transformatorischen Spulenpaar (6,7), das die Schwingungsenergie eines elektrodynamischen oder piezoelektrischen an einem translatorisch und/oder rotatorisch bewegbaren Maschinenelement (14) befestigten Meßelementes (5) über die mit dem Meßelement (5) ohne weitere Bauelemente direkt elektrisch verbundene, in der Sensorvorrichtung (1) angeordnete Primärspule (6) auf die Sekundärspule (7) des transformatorischen Spulenpaars (6,7) berührungslos überträgt, wobei die Sekundärspule (7) in der zu der Sensorvorrichtung (1) mit einem Luftspalt (8) mit Abstand gehaltenen Empfängervorrichtung (2) an einem ortsfesten Maschinenelement (15) angeordnet ist, die das gemessene und transformierte Schwingungs- oder Körperschall-Meßsignal weiterleitet,
**dadurch gekennzeichnet,**
daß ein oder mehrere bewegbare Maschinenelemente (14) jeweils mehrere Sensorvorrichtungen (1) aufweisen, und daß jede dieser Sensorvorrichtungen (1) jedesmal dann ein Meßsignal in die Empfängervorrichtung (2) am ortsfesten Maschinenelement (15) transformiert, wenn das bewegbare Maschinenelement (14) mit seiner Sensorvorrichtung (1) so positioniert ist, daß sich die Primär- und Sekundärspule unter Einhaltung des Luftspaltabstandes gegenüberstehen.

3. Sensorsystem nach einem der Ansprüche 1 oder 2, dadurch gekennzeichnet, daß außer mindestens einer Sensorvorrichtung (1) an einem oder mehreren bewegbaren Maschinenelementen (14) auch mehrere Empfängervorrichtungen (2) an ortsfesten und/oder bewegbaren Maschinenelementen (14,15) angeordnet sind, wobei dann Meßsignale von einer beliebigen Sensorvorrichtung (1) in eine beliebige Empfängervorrichtung (2) transformiert werden, wenn eine Sensorvorrichtung (1) so gegenüber einer Empfängervorrichtung (2) positioniert sind, daß sich die Primär- und die Sekundärspule (6,7) unter Einhaltung des Luftspaltes (8) gegenüberstehen.

4. Sensorsystem nach einem der Ansprüche 1 bis 3, dadurch gekennzeichnet, daß die Primär- und die Sekundärspule (6,7) der Sensor- und Empfängervorrichtung (1,2) im wesentlichen koaxial zueinander stehen und der Luftspalt (8) bzw. der Abstand zwischen ihnen nicht weniger als ca. 0,2 aber nicht mehr als ca. 2 mm beträgt, jedoch bei gegeneinander austauschbaren Sensor- und Empfängervorrichtungen (1,2) stets denselben Luftspaltabstand haben.

5. Sensorsystem nach einem der Ansprüche 1 bis 4, dadurch gekennzeichnet, daß die Sensorvorrichtung (1) und/oder die Empfängervorrichtung (2) in einer Aussparung (18, 19) des jeweiligen Maschinenelementes (14,15) versenkt angeordnet sind.

6. Sensorsystem nach einem der Ansprüche 1 bis 5, dadurch gekennzeichnet, daß die Sensor- und/oder der Empfängervorrichtung (1,2) einen abgesetzten Bund (32) oder eine Nut hat, welche teilweise oder vollständig das Gehäuse (3,4) umgeben und zur form- oder kraftschlüssigen Montage der Gehäuse (3,4) in den Maschinenelementen (14,15) mittels geeigneter Spannmittel dienen.

7. Sensorsystem nach einem der Ansprüche 1 bis 6, dadurch gekennzeichnet, daß kein elektrischer Isolator (20) zwischen dem Meßelement (5) und dem metallischen Gehäuse (3) der Sensorvorrichtung (1) angeordnet ist und damit die elektrische Masse des Meßelementes (5) über das metallische Gehäuse (3) mit der elektrischen Masse des Maschinenelementes (14) unmittelbar verbunden ist.

8. Sensorsystem nach einem der Ansprüche 1 bis 6, dadurch gekennzeichnet, daß das Gehäuse (21) der Sensorvorrichtung (1) zur elektrischen Isolierung der Masse des Meßelementes (5) gegenüber der elektrischen Masse des Maschinenelementes (14) aus einem elektrisch isolierenden, aber gut schwingungs- oder körperschalleitenden Material, z.B. Isolierkeramik besteht, auf der das Meßelement (5) direkt befestigt ist, und daß zur Abschirmung der Sensorvorrichtung (1) gegenüber elektromagnetischen Störungen die Sensorvorrichtung (1) in das Maschinenelement (14,15) eingelassen ist oder eine Abschirmung dadurch realisiert ist, daß das Gehäuse (21) von innen metallisch ausgekleidet ist und diese Auskleidung (22) elektrisch mit der elektrischen Masse des Meßelementes (5) verbunden ist.

9. Sensorsystem nach einem der Ansprüche 1 bis 8, dadurch gekennzeichnet, daß die Empfängervorrichtung (2) neben der Sekundärspule (7) eine Impedanzwandlerbzw. Verstärkeranordnung (29) aufweist.

## Claims

1. A sensor system consisting of a vibration or structure-borne noise sensor device (1) and a receiver device (2) with a transformer-like pair of coils (6, 7), the system contactlessly transmitting the vibration energy of an electrodynamic or piezoelectric measuring element (5), mounted on a traversing and/or rotatable machine element (14), via a primary coil (6), which is connected directly to said measuring element (5) without any other components and is arranged in said sensor device (1), to a secondary coil (7) of said transformer-like pair of coils (6, 7), said secondary coil (7) being provided on a stationary machine element (15) and being arranged in said receiver device (2) spaced from said sensor device (1) by an air gap (8), said receiver device further transmitting the measured and transformed vibration or structure-borne noise measuring signal,
characterized in
- that a plurality of movable machine elements (14) each have one sensor device (1), one of said sensor devices (1) transforming a measuring signal to said receiver device (2) on said stationary machine element (15) every time said movable machine element (14) is positioned with its sensor element (1) such that said primary and secondary coils (6, 7) are opposite each other, while maintaining said air gap distance.

2. A sensor system consisting of a vibration or structure-borne noise sensor device (1) and a receiver device (2) with a transformer-like pair of coils (6, 7), the system contactlessly transmitting the vibration energy of an electrodynamic or piezoelectric measuring element (5), mounted on a traversing and/or rotatable machine element (14), via a primary coil (6), which is connected directly to said measuring element (5) without any other components and is arranged in said sensor device (1), to a secondary coil (7) of said transformer-like pair of coils (6, 7), said secondary coil (7) being provided on a stationary machine element (15) and being arranged in said receiver device (2) spaced from said sensor device (1) by an air gap (8), said receiver device further transmitting the measured and transformed vibration or structure-borne noise measuring signal,
characterized in
- that one or a plurality of movable machine elements (14) each have a plurality of sensor devices (1) and that each of said sensor devices (1) transforms a measuring signal to said receiver device (2) on said stationary machine element (15) every time said movable machine element (14) is positioned with its sensor element (1) such that said primary and secondary coils (6, 7) are opposite each other, while maintaining said air gap distance.

3. The sensor system of one of claims 1 or 2, characterized in that, besides at least one sensor device (1) on one or a plurality of movable machine elements (14), a plurality of receiver devices (2) are arranged on stationary and/or movable machine elements (14, 15), measuring signals being transformed to any of said receiver devices (2) by any of said sensor devices (1) when a sensor device (1) is positioned opposite a receiver device (2) such that said primary (6) and said secondary coil (7) are facing each other while maintaining said air gap (8).

4. The sensor system of one of claims 1 to 3, characterized in that said primary and said secondary coils (6, 7) of said sensor and receiver devices (1, 2) are substantially coaxial with respect to each other and that said air gap (8) or the distance between them is not less than about 0,2 mm, but not more than about 2 mm, however, the air gap distance is always the same if the sensor and receiver devices (1, 2) are interchangeable.

5. The sensor system of one of claims 1 to 4, characterized in that said sensor device (1) and/or said receiver device (2) are disposed in a recess (18, 19) of the respective machine element (14, 15).

6. The sensor system of one of claims 1 to 5, characterized in that said sensor and/or said receiver device (1, 2) have an offset collar (32) or a groove that partly or completely surround said housing (3, 4) and serve to mount said housings (3, 4) positively or non-positively in said machine elements (14, 15) using suitable chucking means.

7. The sensor system of one of claims 1 to 6, characterized in that no electric insulator (20) is arranged between said measuring element (5) and said metal housing (3) of said sensor device (1) and that the electrical mass of said measuring element (5) is thus directly connected with the electrical mass of said machine element (14) via said metal housing (3).

8. The sensor system of one of claims 1 to 6, characterized in that, for electrically insulating the mass of said measuring element (5) from the electrical mass of said machine element (14), said housing (21) of said sensor device (1) is made of an electrically insulating material with good vibration or structure-borne noise conducting properties, such as insulating ceramics, on which said measuring element (5) is fastened, and in that, for shielding said sensor device (1) from electromagnetic noises, said sensor device (1) is sunk in said machine element (14, 15) or that an shielding is realized by lining the inside of said housing (21) with metal, and that this lining (22) is electrically connected with the electrical mass of said measuring element (5).

9. The sensor system of one of claims 1 to 8, characterized in that said receiver device (2) has an impedance converter or amplifier assembly (29) besides said secondary coil (7).

## Revendications

1. Système de détection se composant d'un dispositif de détection (1) de vibrations ou de bruits de structure et d'un dispositif récepteur (2) avec une paire de bobines de transformateur (6, 7), qui transmet sans contact l'énergie de vibration d'un élément de mesure (5) électrodynamique ou piézo-électrique, fixé à un élément de machine (14) mobile en translation et/ou en rotation, par la bobine primaire (6) installée dans le dispositif de détection (1), liée électriquement directement à l'élément de mesure (5) sans autre composant, à la bobine secondaire (7) de la paire de bobines de transformateur (6, 7), la bobine secondaire (7) étant placée dans le dispositif récepteur (2), maintenu à distance du dispositif de détection (1) avec un jeu (8), sur un élément de machine (15) fixe, lequel dispositif récepteur transmet le signal de mesure de vibrations ou de bruits de structure mesuré et transformé,
caractérisé par le fait que plusieurs éléments de machine (14) mobiles comportent respectivement un dispositif de détection (1), éléments dont un des dispositifs de détection (1) transforme alors un signal de mesure dans le dispositif récepteur (2) sur l'élément de machine fixe (15) chaque fois que l'élément de machine (14) mobile avec son dispositif de détection (1) est positionné de telle sorte que les bobines primaire et secondaire (6, 7) sont en face avec respect de l'écart de jeu.

2. Système de détection se composant d'un dispositif de détection (1) de vibrations ou de bruits de structure et d'un dispositif récepteur (2) avec une paire de bobines de transformateur (6, 7), qui transmet sans contact l'énergie de vibration d'un élément de mesure (5) électrodynamique ou piézo-électrique fixé à un élément de machine (14) mobile en translation et/ou en rotation par la bobine primaire (6) installée dans le dispositif de détection (1), liée électriquement directement à l'élément de mesure (5) sans autre composant, à la bobine secondaire (7) de la paire de bobines de transformateur (6, 7), la bobine secondaire (7) étant placée dans le dispositif récepteur (2), maintenu à distance du dispositif de détection (1) avec un jeu (8), sur un élément de machine (15) fixe, lequel dispositif récepteur transmet le signal de mesure de vibrations ou de bruits de structure mesuré et transformé,
caractérisé par le fait qu'un ou plusieurs éléments de machine (14) mobiles présentent respectivement plusieurs dispositifs de détection (1) et que chacun de ces dispositifs de détection (1) transforme alors un signal de mesure dans le dispositif récepteur (2) sur l'élément de machine (15) fixe chaque fois que l'élément de machine mobile (14) est positionné avec son dispositif de détection (1) de telle sorte que les bobines primaire et secondaire se trouvent en face avec respect de l'écart de jeu.

3. Système de détection selon l'une des revendications 1 ou 2, caractérisé par le fait qu'en dehors d'au moins un dispositif de détection (1) sur un ou plusieurs éléments de machine (14) mobiles, plusieurs dispositifs récepteurs (2) sont aussi placés sur des éléments de machine (14, 15) fixes et/ou mobiles, les signaux de mesure d'un dispositif de détection (1) quelconque étant alors transformés dans un dispositif récepteur (2) quelconque, lorsqu'un dispositif de détection (1) est positionné vis-à-vis d'un dispositif récepteur (2) de telle sorte que les bobines primaire et secondaire (6, 7) se trouvent en face avec respect du jeu (8).

4. Système de détection selon l'une des revendications 1 à 3, caractérisé par le fait que les bobines primaire et secondaire (6, 7) du dispositif de détection et du dispositif récepteur (1, 2) sont disposées essentiellement coaxialement l'une par rapport à l'autre et que le jeu (8) ou la distance entre elles n'est pas inférieur à environ 0,2 mm mais n'est pas supérieur à environ 2 mm, les bobines ayant toutefois toujours le même écart de jeu dans des dispositifs de détection et récepteur (1, 2) échangeables mutuellement.

5. Système de détection selon l'une des revendications 1 à 4, caractérisé par le fait que le dispositif de détection (1) et/ou le dispositif récepteur (2) sont disposés logés au fond d'un évidement (18, 19) de l'élément de machine respectif (14, 15).

6. Système de détection selon l'une des revendications 1 à 5, caractérisé par le fait que le dispositif de détection et/ou le dispositif récepteur (1, 2) comporte un collet (32) décalé ou une rainure, qui entoure partiellement ou complètement le boîtier (3, 4) et qui sert à un montage du boîtier (3, 4) dans les éléments de machine (14, 15) avec liaison de forme ou liaison par force, à l'aide d'un moyen de tension approprié.

7. Système de détection selon l'une des revendications 1 à 6, caractérisé par le fait qu'aucun isolateur électrique (20) n'est disposé entre l'élément de mesure (5) et le boîtier métallique (3) du dispositif de détection (1), et qu'ainsi la masse électrique de l'élément de mesure (5) est reliée directement par le boîtier métallique (3) à la masse électrique de l'élément de machine (14).

8. Système de détection selon l'une des revendications 1 à 6, caractérisé par le fait que le boîtier (21) du dispositif de détection (1), en vue de l'isolation électrique de la masse de l'élément de mesure (5) vis-à-vis de la masse électrique de l'élément de machine (14), se compose d'un matériau isolant électriquement, mais bon conducteur des vibrations ou des bruits de structure, par exemple une céramique isolante, sur lequel l'élément de mesure (5) est fixé directement, et que pour la protection du dispositif de détection (1) vis-à-vis de dommages électromagnétiques, le dispositif de détection (1) est engagé dans l'élément de machine (14, 15), ou bien une protection est réalisée par le fait que le boîtier (21) est recouvert intérieurement de métal et que ce revêtement (22) est lié électriquement à la masse électrique de l'élément de mesure (5).

9. Système de détection selon l'une des revendications 1 à 8, caractérisé par le fait que le dispositif récepteur (2) comporte en plus de la bobine secondaire (7) un dispositif amplificateur (29) ou d'adaptation d'impédance.
